# EUROPEAN PATENT APPLICATION

(11) **EP 4 378 641 A1**
(43) Date of publication of application: **05.06.2024**
(21) Application number: 22211127.0
(22) Date of filing: 02.12.2022
(51) Int. Cl.: B25J 15/08, B25J 19/00, G01N 35/00

(54) **METHOD OF OPERATING A GRIPPING DEVICE**

(71) Applicant: Roche Diagnostics GmbH, 68305 Mannheim (DE); F. Hoffmann-La Roche AG, 4070 Basel (CH)
(72) Inventor: Vasile, Teodor-Laurentiu, 81547 München (DE); Ali-Mahmoud, Yanis, 80809 München (DE); Alesch, Carsten, 64720 Michelstadt (DE)
(74) Representative: Patentanwälte Ruff, Wilhelm, Beier, Dauster & Partner mbB

(57) **Abstract**

The invention relates to a method of operating a gripping device (100) being adapted to insert sample containers (1) into sample container racks (2) and/or remove sample containers (1) from sample container racks (2), wherein the gripping device (100) comprises gripping fingers (3) being adapted to grip the sample containers (1), wherein the method comprises the steps: moving the gripping fingers (3) in z-direction to insert a sample container (1) into a sample container rack (2) or remove a sample container (1) from a sample container rack (2), determining, if the gripping fingers (3) get in contact with the sample container rack (2), and performing an error procedure, if the gripping fingers (3) get in contact with the sample container rack (2).

## Description

The invention relates to a method of operating a gripping device being adapted to insert sample containers into sample container racks and/or remove sample containers from sample container racks, wherein the gripping device comprises gripping fingers being adapted to grip the sample containers. Furthermore, the invention relates to such a gripping device.

Sorters are laboratory systems used in laboratory automation. Such sorters typically comprise a gripping device for handling sample containers. The sample containers can contain samples to be processed, e. g. by a laboratory station. Therein, gripping devices having movable gripping fingers are commonly used for inserting sample containers into sample container racks and/or for removing sample containers from sample container racks. However, during handling sample containers with such a gripping device, unexpected problems may occur which require a reinitialization of the gripping device.

It is an object of the invention to provide a method for operating a gripping device as well as such a gripping device enabling improvement of reliability in the operation of the gripping device.

This object is solved by the subject matter of the independent claims. Preferred embodiments are subject matter of the dependent claims.

The gripping device to be operated according to the method is adapted to insert sample containers into sample container racks and/or to remove sample containers from sample container racks. The gripping device may be used in a laboratory environment. Accordingly, the method may be carried out in a laboratory environment. The gripping device comprises gripping fingers being adapted to grip the sample containers. Such a sample container can be of substantially tubular shape. A sample container of tubular shape may have a closed ending and an open ending arranged opposite one another, the latter of which may be closable by a detachable lid. According to one step of the method the gripping fingers are moved in z-direction to insert a sample container into a sample container rack or to remove a sample container from a sample container rack. Both a removal of a sample container from a sample container rack as well as an insertion of a sample container into a sample container rack, can thus come along with a movement of the gripping fingers in z-direction. A sample container rack can comprise retainers. Sample containers inserted into the retainers can be carried by the rack. The number of sample containers carried by the rack may e. g. be a number in the range of 2 up to 150. In another step of the method, it is determined if the gripping fingers get in contact with the sample container rack. In a further step of the method, an error procedure is performed if the gripping fingers get in contact with the sample container rack. Thus, the error procedure is only to be performed if the gripping fingers got in contact with the sample container rack. This allows for adapting the error procedure in a way avoiding damaging of the gripping fingers and/or the sample container and/or the sample container rack. This can improve reliability of the operation of the gripping device. In particular, the error procedure can help to avoid that the gripping fingers are moved while there is a risk of contact with the sample container rack.

The z-direction can be parallel to a direction of gravity. An x- and a y-direction can be perpendicular to one another and to the z-direction. A cartesian coordinate system can be formed by the x-, the y- and the z-direction.

According to an embodiment of the invention, the gripping device comprises an electric motor being adapted to cause the movement of the gripping fingers in z-direction. Therein, the step of determining if the gripping fingers get in contact with the sample container rack comprises two sub-steps. According to one of these sub-steps, a drive current being applied to the electric motor is measured. According to another sub-step, it is determined that the gripping fingers get in contact with the sample container rack if the drive current exceeds a corresponding threshold. This allows for recognition of contact between the gripping fingers and the sample container rack without any need of additional sensors. This can enable significant cost advantages.

According to another embodiment, the gripping device comprises an electric motor being adapted to cause the movement of the gripping fingers in z-direction. Therein, the step of determining if the gripping fingers get in contact with the sample container rack comprises several sub-steps. According to one of these sub-steps, a torque and/or a force caused by the electric motor are measured. According to another sub-step, it is determined that the gripping fingers get in contact with the sample container rack if the measured torque and/or force exceed a corresponding threshold. This allows for detection of contact between the gripping fingers and the sample container rack with particularly low influence on the drive current fed to the electric motor.

According to another embodiment, the step of performing an error procedure comprises a sub-step. According to this sub-step the gripping fingers are moved upwards in z-direction by a predetermined distance. In this way, it can be ensured that the gripping fingers and the sample container potentially still being held in between the gripping fingers are located at a distance to the sample container rack before any further steps of the error procedure are performed.

According to another embodiment, the gripping fingers are kept static relative to one another during the step of moving the gripping fingers. This can prevent a sample container that may be held by the gripping fingers from falling onto the sample container rack in an uncontrolled manner.

According to another embodiment, the step of performing the error procedure comprises a sub-step. According to this sub-step, an acoustical signal, and/or a visual signal, and/or a haptic signal indicating an error is generated. Thus, an operator of the gripping device can be informed about the occurrence of the error in a particularly well recognizable manner.

According to another embodiment, the step of performing the error procedure comprises several sub-steps. One of these sub-steps comprises opening and closing the gripping fingers. Another of these sub-steps comprises monitoring if the gripping fingers open and close correctly. According to a further sub-step, the gripping device is moved to a known position. In another sub-step, each of an x-position value, a y-position value and a z-position value indicating the position of the gripping device are set to predefined values if the gripping device is placed at a known position. When the gripping device is at the known position, it can be ready for another pass-through of the method.

According to another embodiment, the step of opening and closing the gripping fingers is performed after the step of moving the gripping device to the known position. In this way, it can be prevented that any sample container potentially being held by the gripping fingers may be dropped at a random place.

According to another embodiment, the gripping device comprises an actuator being adapted to cause opening and closing of the gripping fingers. Therein, the step of performing the error procedure comprises an initial step. According to the initial step, the gripping fingers are being actuated before moving the gripping device. Being actuated does not necessarily lead to a movement of the gripping fingers relative to one another, for instance, if they get in contact with the sample container rack and opening is thus blocked.

According to another embodiment, the step of performing the error procedure comprises several sub-steps. One of these sub-steps comprises measuring an electric actuating current being applied to the actuator. According to another sub-step, a malfunction of the gripping fingers is recognized if the actuating current exceeds a predetermined threshold. In this way, it can be detected whether the gripping fingers move correctly or not. In particular, it can be detected if the gripping fingers are blocked, for instance, as a result from the collision between the gripping fingers and the sample container rack.

According to another embodiment, correct positioning of the sample container relative to the sample container rack is determined during the step of moving the gripping fingers in z-direction to insert a sample container into a sample container rack or to remove a sample container from a sample container rack. In particular, correct positioning is determined by a force sensor of the gripping device and/or in the same way as the contact or collision between the container rack and the gripping fingers is determined.

In particular, to determine correct positioning and/or collision, a sensor generated signal of force-dependent value is monitored while moving the gripping fingers in z-direction. Both correct positioning and collision can lead to a similar change in the value of the signal. As to distinguish correct positioning from a collision, a threshold value may be predetermined. Only if the value of the signal exceeds the threshold value, a collision and thus incorrect positioning may be determined. It goes without saying that, alternatively, collision may be determined if the signal falls below the predetermined threshold. The threshold value may be predetermined according to particular specifications of the gripping device and/or the sample container and/or the sample container rack. Such a specification may be a material and/or a surface finish of the afore-mentioned components, respectively. If no collision is recognized, the signal can be monitored to determine correct positioning.

The gripping device may be adapted for use in a laboratory system. The gripping device has gripping fingers. The gripping fingers are adapted to grip sample containers. The gripping device comprises an electric motor being adapted to cause movement of the gripping fingers in z-direction. Furthermore, the gripping device has an actuator being adapted to cause opening and closing of the gripping fingers. Therein, the gripping device is operable according to a method as described above. Thus, the afore-mentioned advantages of the method transfer to the gripping device, accordingly.

Further advantages and features of the invention arise from the claims as well as from the following description of a preferred embodiment of the invention, which is depicted by the drawings. Therein, equal reference signs relate to equal or similar or functionally equal components.

It is to be understood that the features mentioned above as well as the features described below are not only usable in the stated combination, respectively, but also in other combinations or solely, without leaving the frame of the present invention.
- Fig. 1: schematically depicts a gripping device which is operated following a method according to the invention, and
- Fig. 2: illustrates a flowchart for an example of the method according to the invention.

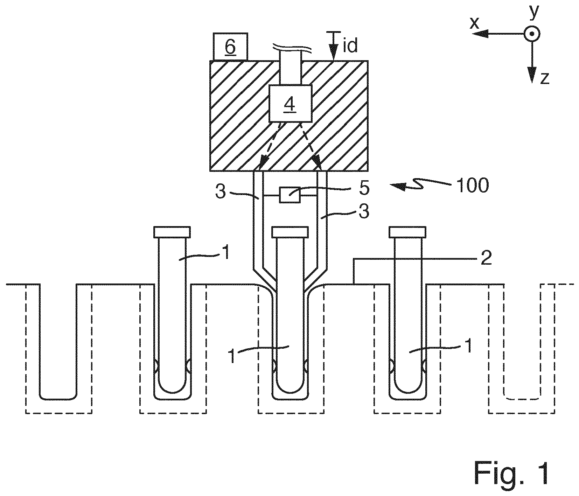

A gripping device 100 as schematically illustrated in fig. 1 is adapted to insert sample containers 1 into sample container racks 2. The gripping device 100 as shown is also adapted to remove sample containers 1 from sample container racks 2. The gripping device 100 has gripping fingers 3. The gripping fingers 3 are adapted to grip the sample containers 1. The gripping device 100 is configured to be operated according to a method comprising several steps.

In one step of the method, the gripping fingers 3 are moved in z-direction to insert a sample container 1 into a sample container rack 2 or to remove a sample container 1 from a sample container rack 2. In another step of the method, it is determined if the gripping fingers 3 get in contact with the sample container rack 2. According to another step of the method, an error procedure is performed if the gripping fingers 3 get in contact with the sample container rack 2.

The gripping device 100 has an electric motor 4. The electric motor 4 is adapted to cause the movement of the gripping fingers 3 in z-direction. Preferably, the gripping device 100 comprises further electric motors to cause movement of the gripping fingers 3 in x- and y- direction. Furthermore, the gripping device 100 comprises an actuator 5 which is adapted to cause opening and closing of the gripping fingers 3.

For instance, the step of determining if the gripping fingers 3 get in contact with the sample container rack 2 comprises sub-steps as follows. In one sub-step, a drive current id being applied to the electric motor 4 is measured. In another sub-step, it is determined that the gripping fingers 3 get in contact with the sample container rack 2 if the drive current id exceeds a corresponding threshold. In another sub-step, a torque and/or a force caused by the electric motor 4 can be measured. Then, it can be determined that the gripping fingers 3 get in contact with the sample container rack 2 if the measured torque and/or force exceed a corresponding threshold.

The step of performing the error procedure may comprise sub-steps. In one sub-step, the gripping fingers 3 can be moved upwards in z-direction by a predetermined distance. During this sub-step of moving the gripping fingers 3 upwards in z-direction, the gripping fingers 3 can be kept static relative to one another. For example, the gripping fingers 3 can be kept static relative to one another at least until the predetermined distance is reached. The step of performing the error procedure can comprise a sub-step, according to which a signal indicating an error is generated. The signal generated to indicate the error can be an acoustical signal, a visual signal or a haptic signal or a combination thereof.

In another sub-step comprised by the step of performing the error procedure, the gripping fingers 3 are opened and closed. In another sub-step, it can be monitored if the gripping fingers 3 open and close correctly. According to another sub-step, the gripping device 100 can be moved to a known position. In another sub-step, an x-position value, a y-position value, and a z-position value indicating the position of the gripping device 100 are set to predefined values, respectively, if the gripping device 100 is placed at the known position. The predefined values may be equal to zero. The known position can be a home position, in particular at (0; 0; 0) in cartesian coordinates regarding a cartesian coordinate system spanned by the z-direction as well as an x- and a y- direction. Thus, moving the gripping device 100 to the known position may be referred to by the term "homing".

For example, the step of opening and closing the gripping fingers 3 is performed after the step of moving the gripping device 100 to the known position. The known position can be located directly above a neutral area or directly above the sample container rack 2, in particular with respect to gravity.

The step of performing the error procedure may comprise an initial step. According to the initial step, the gripping fingers 3 are being actuated before the gripping device 100 is moved. Actuating the gripping fingers 3 does not necessarily lead to a movement of the gripping fingers 3 relative to one another. Actuating the gripping fingers 3 may only cause the gripping fingers 3 to move relative to one another in case the gripping fingers 3 are not blocked by the sample container 1 and/or the sample container rack 2. In a sub-step of the step of performing the error procedure, an electric actuating current being applied to the actuator 5 is measured. In case the actuating current exceeds a predetermined threshold, a malfunction of the gripping fingers 3 is recognized.

During the step of moving the gripping fingers 3 in z-direction to insert a sample container 1 into a sample container rack 2 or to remove a sample container 1 from a sample container rack 2, correct positioning of the sample container 1 relative to the sample container rack 2 is determined. Correct positioning, for example, can be determined by a force sensor 6 of the gripping device 100 and/or in the same way as the contact between the container rack 2 and the gripping fingers 3 is determined. The method may comprise a plausibility check. The plausibility check can include verifying whether a determined contact between the gripping fingers 3 and the sample container rack 2 is plausible at a present location of the gripping fingers 3 relative to the sample container rack 2. Contact between the sample container rack 2 and the gripping fingers 3 can be deemed plausible if the present position of the gripping fingers 3 opposite a known position of the sample container rack 2 is within a predetermined distance. The predetermined distance may be zero so that contact may be considered plausible when the present position of the gripping fingers 3 is at or below a known height of the sample container rack 2. In case the predetermined distance is different from zero, a plausibility zone can be spanned around the known position of the sample container rack 2 at the predetermined distance. Thus, the plausibility check can comprise comparing the present position of the gripping fingers 3 to the known position of the sample container rack 2, in particular including the height of the sample container rack and/or the plausibility zone surrounding the sample container rack 2.

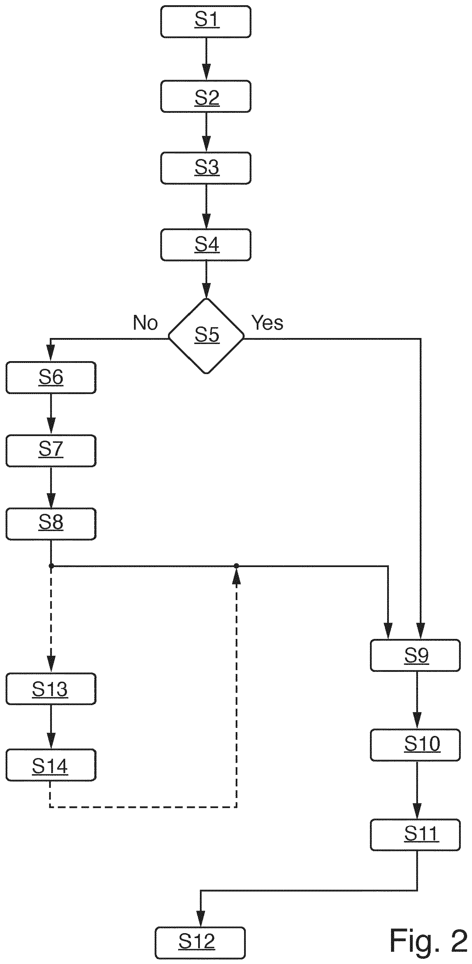

In the following, an example of the method for operating the gripping device 100 will be described in more detail with respect to fig 2. The flowchart of fig. 2 comprises several fields indicated by the reference signs S1 to S14, respectively. Each of the fields S1 to S14 may symbolize a separate step of the method. Thus, both the terms of "field" and "step" are used synonymously in the following. In the example of fig. 2, the method begins with a field S1, according to which the gripping device 100 picks or places a sample container 1. "Pick" therein stands for picking up a sample container 1 from the sample container rack 2. "Place" therein stands for the opposite operation.

After picking up or placing the sample container 1, the gripping fingers 3 are moved in z-direction, indicated by field S2. During the movement of the gripping fingers 3 along the z-direction, a collision between the gripping fingers 3 and the sample container rack 2 can occur, in particular accidentally.

As indicated by field S3 following field S2, such a collision is recognized. After recognition of the collision between the gripping fingers 3 and the sample container rack 2, the gripping fingers 3 are lifted in z-direction by a predetermined distance above the sample container rack 2, for example by a few, e. g. by 2 to 10, centimeters, see field S4. Field S5 following field S4 stands for querying whether lifting the gripper fingers 3 is possible or not. In case lifting the gripping fingers 3 is possible, the method is continued with field S9. In case lifting the gripping fingers 3 is not possible, the method is continued with field S6.

According to field S6, the gripping device 100 is powered off. Then, in field S7, a main cover of the gripping device 100 is opened as to free the gripping fingers 3 from the collision. Then, in field S8, the gripping device 100 is powered on again.

According to field S9, the gripping device 100 is reinitialized, for example by manual input via a user interface of the gripping device 100. After reinitialization of the gripping device 100, the gripping fingers 3 perform a function check, see field S10. The function check can comprise opening and closing the gripping fingers 3. After the function check, the gripping device 100 performs a homing procedure, see field S11. Within the homing procedure, the gripping fingers 3 are moved to a predetermined position, for example at (0; 0; 0) in absolute coordinates of the gripping device 100. The method ends in field S12, symbolizing readiness of the gripping device 100 for performing another picking or placing of a sample container 1.

Optionally, after performing the step of field S8, damaged components of the gripping device 100 can be replaced as indicated by field S13. Field S14 which follows field S13 stands for closing a cover of the gripping device 100 which before has been opened for replacing damaged components.

## Claims

1. Method of operating a gripping device (100) being adapted to insert sample containers (1) into sample container racks (2) and/or remove sample containers (1) from sample container racks (2), wherein the gripping device (100) comprises gripping fingers (3) being adapted to grip the sample containers (1), wherein the method comprises the steps:
- moving the gripping fingers (3) in z-direction to insert a sample container (1) into a sample container rack (2) or remove a sample container (1) from a sample container rack (2),
- determining, if the gripping fingers (3) get in contact with the sample container rack (2), and
- performing an error procedure, if the gripping fingers (3) get in contact with the sample container rack (2).

2. Method according to claim 1,
- wherein the gripping device (100) comprises:
- an electric motor (4) being adapted to cause the movement of the gripping fingers (3) in z-direction,
- **characterized in that** the step of determining, if the gripping fingers (3) get in contact with the sample container rack (2), comprises the steps:
- measuring a drive current (id) being applied to the electric motor (4), and
- determining, that the gripping fingers (3) get in contact with the sample container rack (2), if the drive current (id) exceeds a corresponding threshold.

3. Method according to one of the preceding claims,
- wherein the gripping device (100) comprises:
- an electric motor (4) being adapted to cause the movement of the gripping fingers (3) in z-direction,
- **characterized in that** the step of determining, if the gripping fingers (3) get in contact with the sample container rack (2), comprises the steps:
- measuring a torque and/or a force caused by the electric motor (4), and
- determining, that the gripping fingers (3) get in contact with the sample container rack (2), if the measured torque and/or force exceeds a corresponding threshold.

4. Method according to one of the preceding claims, **characterized in that**
- the step of performing an error procedure comprises the step:
- moving the gripping fingers (3) upwards in z-direction by a predetermined distance.

5. Method according to claim 4, **characterized in that**
- during the step of moving the gripping fingers (3) upwards in z-direction the gripping fingers (3) are kept static relative to one another.

6. Method according to one of the preceding claims, **characterized in that**
- the step of performing an error procedure comprises the step:
- generating an acoustical signal, and/or a visual signal, and/or a haptic signal indicating an error.

7. Method according to one of the preceding claims, **characterized in that**
- the step of performing an error procedure comprises the steps:
- opening and closing the gripping fingers (3),
- monitoring, if the gripping fingers (3) open and close correctly,
- moving the gripping device (100) to a known position, and
- setting a x-position value, a y-position value and a z-position value indicating the position of the gripping device (100) to predefined values, respectively, if the gripping device (100) is placed at the known position.

8. Method according to claim 7, **characterized in that**
- the step of opening and closing the gripping fingers (3) is performed after the step of moving the gripping device (100) to the known position.

9. Method according to claim 7 or 8, **characterized in that**
- the known position is located, in particular with respect to gravity, directly above a neutral area or directly above the sample container rack (2).

10. Method according to any of claims 7 to 9,
- wherein the gripping device (100) comprises:
- an actuator (5) being adapted to cause opening and closing of the gripping fingers (3),
- **characterized in that** the step of performing an error procedure comprises the initial step:
- actuating the gripping fingers (3) before moving the gripping device (100).

11. Method according to claim 10, **characterized in that**
- the step of performing the error procedure comprises the steps:
- measuring an actuating current being applied to the actuator (5), and
- recognizing a malfunction of the gripping fingers (3) if the actuating current exceeds a predetermined threshold.

12. Method according to one of the preceding claims, **characterized in that**
- during the step of moving the gripping fingers (3) in z-direction to insert a sample container (1) into a sample container rack (2) or remove a sample container (1) from a sample container rack (2), correct positioning of the sample container (1) relative to the sample container rack (2) is determined, in particular by a force sensor (6) of the gripping device (100) and/or in the same way as determining, if the gripping fingers (3) get in contact with the sample container rack (2).

13. Gripping device (100) for a laboratory system, the gripping device (100) comprising
- gripping fingers (3) being adapted to grip sample containers (1),
- an electric motor (4) being adapted to cause movement of the gripping fingers (3) in z-direction, and
- an actuator (5) being adapted to cause opening and closing of the gripping fingers (3),
- the gripping device (100) being operable according to a method according to any of the preceding claims.
